(19)

Europäisches
Patentamt
European
Patent Office
Office européen
des brevets

(11) **EP 4 761 337 A1**

(12) **EUROPEAN PATENT APPLICATION**
published in accordance with Art. 153(4) EPC

(43) Date of publication:
**17.06.2026 Bulletin 2026/25**

(21) Application number: **24852389.6**

(22) Date of filing: **09.08.2024**

(51) International Patent Classification (IPC):
*H04W 24/08* (2009.01)          *H04W 52/02* (2009.01)
*H04W 48/08* (2009.01)          *H04W 56/00* (2009.01)
*H04W 76/28* (2018.01)          *H04B 17/318* (2015.01)

(52) Cooperative Patent Classification (CPC):
**H04B 17/318; H04W 24/08; H04W 48/08;
H04W 52/02; H04W 56/00; H04W 76/28**

(86) International application number:
**PCT/KR2024/011848**

(87) International publication number:
**WO 2025/034036 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023  KR 20230104673
16.02.2024  KR 20240022975**

(71) Applicant: **LG Electronics Inc.
Yeongdeungpo-gu
Seoul 07336 (KR)**

(72) Inventors:
• **LEE, Sunghoon**
  **Seoul 06772 (KR)**
• **LEE, Youngdae**
  **Seoul 06772 (KR)**
• **KIM, Jaehyung**
  **Seoul 06772 (KR)**
• **YANG, Suckchel**
  **Seoul 06772 (KR)**
• **KIM, Seonwook**
  **Seoul 06772 (KR)**
• **HWANG, Seunggye**
  **Seoul 06772 (KR)**

(74) Representative: **Maikowski & Ninnemann
Patentanwälte Partnerschaft mbB
Postfach 15 09 20
10671 Berlin (DE)**

(54) **METHOD AND APPARATUS FOR TRANSMITTING AND RECEIVING SIGNALS IN WIRELESS COMMUNICATION SYSTEM**

(57)    A method for receiving a signal by a terminal in a wireless communication system according to an embodiment of the present disclosure may comprise: receiving a radio resource management (RRM) measurement configuration via higher-layer signaling; receiving a downlink signal from a network; and performing RRM measurement on the downlink signal on the basis of the RRM measurement configuration, wherein, on the basis of the RRM measurement being related to a second reception scheme performed at lower power than a first reception scheme among a plurality of reception schemes including the first reception scheme and the second reception scheme, an offset specific to the second reception scheme is applied to a result of the RRM measurement.

**FIG. 10**

Receive RRC measurement configuration — 1005

Receive downlink signal — 1010

Perform RRC measurement — 1015

Processed by Luminess, 75001 PARIS (FR)

**Description**

**TECHNICAL FIELD**

The present disclosure relates to a wireless communication system, and more particularly, to a method and apparatus for transmitting and receiving an uplink/downlink signal.

**BACKGROUND**

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

A user equipment (UE) should perform a radio resource management (RRM) measurement through a main radio (MR) every predetermined period. For example, a UE in a radio resource control (RRC) idle/inactive state generally has to wake up and receive a signal at least once every 1 or 2 DRX cycles for mobility management, and this operation accounts for a large portion of power consumption during a period without signaling or data traffic.

**DISCLOSURE**

**TECHNICAL PROBLEM**

The present disclosure is intended to provide a method and apparatus for performing an RRM measurement at an MR/LR more accurately and efficiently in a wireless communication system supporting an LP-WUS.

Other technical objects may be derived from embodiments disclosed in the detailed description.

**TECHNICAL SOLUTION**

According to an aspect of the present disclosure, a method of receiving a signal by a user equipment (UE) in a wireless communication system may include receiving a radio resource management (RRM) measurement configuration through higher layer signaling, receiving a downlink signal from a network, and performing an RRM measurement for the downlink signal based on the RRM measurement configuration. Based on the RRM measurement being related to a second reception scheme among a plurality of reception schemes including a first reception scheme and the second reception scheme performed with lower power than the first reception scheme, an offset specific to the second reception scheme may be applied to a result of the RRM measurement.

The offset specific to the second reception scheme may be determined based on a type of the downlink signal. For example, the offset specific to the second reception scheme may be determined based on whether the downlink signal is a low power-synchronization signal (LP-SS) or a synchronization signal block (SSB).

Information regarding the offset specific to the second receiving scheme may be provided through system information or UE-dedicated radio resource control (RRC) signaling.

The UE may support an RRM measurement related to the first reception scheme and an RRM measurement related to the second reception scheme. How often the RRM measurement related to the first reception scheme is performed, may be adjusted based on the RRM measurement related to the second reception scheme. For example, based on the RRM measurement related to the second reception scheme having been performed, the UE may omit the RRM measurement related to the first reception scheme at least once.

The UE may be configured to support different types of RRM measurements. The different types of RRM measurements may include at least two of (i) a first type of RRM measurement for measuring an SSB based on the first reception scheme, (ii) a second type of RRM measurement for measuring an LP-SS based on the second reception scheme, (iii) a third type of RRM measurement for measuring the SSB based on the second reception scheme, and (iv) a fourth type of RRM measurement for measuring the LP-SS based on the first reception scheme.

The UE may determine whether a cell selection condition is satisfied based on the result of the RRM measurement to which the offset is applied.

The RRM measurement configuration may include information regarding a target signal received in the second reception scheme, for the RRM measurement.

According to another aspect of the present disclosure, a non-transitory computer-readable recording medium having a program recorded thereon for performing the above method may be provided.

According to another aspect of the present disclosure, an apparatus for wireless communication may include a memory configured to store instructions, and a processor configured to perform operations by executing the instructions. The operations of the processor may include receiving an RRM measurement configuration through higher layer signaling, receiving a downlink signal from a network, and performing an RRM measurement for the downlink signal based on the RRM measurement configuration. Based on the RRM measurement being related to a second reception scheme among a plurality of reception schemes including a first reception scheme and the second reception scheme performed with lower power than the first reception scheme, an offset specific to the second reception scheme may be applied to a result of the RRM measurement.

The apparatus may further include a first receiver configured for the first reception scheme, and a second receiver configured for the second reception scheme. The second receiver may consume less power than the first receiver.

The apparatus may be a UE operating in a wireless communication system or a processing device controlling the UE.

According to another aspect of the present disclosure, a method of transmitting a signal by a base station (BS) in a wireless communication system may include transmitting an RRM measurement configuration to a UE through higher layer signaling, transmitting a downlink signal to the UE, and obtaining a result of an RRM measurement performed on the downlink signal by the UE. Based on the RRM measurement being related to a second reception scheme among a plurality of reception schemes including a first reception scheme of the UE and the second reception scheme performed with lower power than the first reception scheme, an offset specific to the second reception scheme may be applied to the result of the RRM measurement.

According to another aspect of the present disclosure, a BS for wireless communication may include a memory configured to store instructions, and a processor configured to perform operations by executing the instructions. The operations of the processor may include transmitting an RRM measurement configuration to a UE through higher layer signaling, transmitting a downlink signal to the UE, and obtaining a result of an RRM measurement performed on the downlink signal by the UE. Based on the RRM measurement being related to a second reception scheme among a plurality of reception schemes including a first reception scheme of the UE and the second reception scheme performed with lower power than the first reception scheme, an offset specific to the second reception scheme may be applied to the result of the RRM measurement.

**ADVANTAGEOUS EFFECTS**

According to an embodiment, an RRM measurement of an MR/LR may be performed more accurately and efficiently in a wireless communication system supporting an LP-WUS.

Other technical effects may be derived from embodiments disclosed in the detailed description.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates an exemplary physical downlink shared channel (PDSCH) reception and acknowledgement/negative acknowledgement (ACK/NACK) transmission process.

FIG. 3 illustrates an exemplary physical uplink shared channel (PUSCH) transmission process.

FIGS. 4 to 6 are diagrams illustrating a discontinuous reception (DRX) related operation.

FIG. 7 is a diagram illustrating a wake-up signal (WUS).

FIG. 8 is a diagram illustrating an operation of a user equipment (UE) according to an embodiment.

FIG. 9 illustrates a procedure related to a radio resource management (RRM) measurement performed between a UE and a network according to an embodiment.

FIG. 10 is a diagram illustrating signal reception and an RRM measurement of a UE according to an embodiment.

FIG. 11 is a diagram illustrating signal transmission and RRM measurement result reception of a base station (BS) according to an embodiment.

FIG. 12 illustrates a flexible network topology to which some examples of the present disclosure are applicable.

FIG. 13 shows an example of a communication system 100 applied to the present disclosure.

FIG. 14 illustrates an example of a wireless device applicable to the present disclosure.

## DETAILED DESCRIPTION

In the present specification, "A or B" may mean "only A", "only B", or "both A and B". In other words, "A or B" in the present specification may be interpreted as "A and/or B". For example, in the present specification, "A, B or C" may refer to "only A", "only B", "only C", or "any combination of A, B, and C".

Slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B " may mean "only A", "only B", or "both A and B". In addition, the expression "at least one of A or B" or "at least one of A and/or B " in the present specification may be interpreted the same as "at least one of A and B.

In addition, "at least one of A, B and C" in the present specification may refer to "only A", "only B", or "any combination of A, B and C". In addition, " at least one of A, B or C" or "at least one of A, B and/or C " may mean "at least one of A, B and C.

Moreover, parentheses used in the present disclosure may mean "for example." Specifically, when "control information (ABC)" is described, "ABC" may be given as an example of "control information." For example, "control information" may also include DEF as another example. In other words, "control information" in the present disclosure is not limited to "ABC,", which may be described as an example of "control information." Further, when "control information (i.e., ABC)" is described, "ABC" may also be given as an example of "control information."

Further, terms such as "first" and "second" in the present disclosure are used solely to distinguish one component from another and are not used to limit the components. Unless specifically limited, they do not restrict the order or importance of components. Therefore, a first component in one embodiment of the present disclosure may be referred to as a second component in another embodiment, and similarly, a second component in one embodiment may be referred to as a first component in another embodiment.

In the following description, 'when, if, in case of may be replaced with 'based on'.

Technical features described individually in one drawing in the present specification may be implemented individually or simultaneously.

In the present disclosure, a terminal is a user equipment (UE) or a consumer-side device, and may also be referred to as a first node that receives/transmits a signal from/to a base station (BS)/second node/IAB node/transmission-reception point (TRP). The terminal may correspond to a physical node or a logical node. The terminal may correspond to a user-side endpoint or an intermediate point between other endpoints. In communication (including one-to-one, many-to-one, one-to-many, and many-to-many communication) between two points which are not limited to endpoints, the terminal may be a served node. The terminal may be a fixed node or a mobile (unfixed) node in terms of location.

In the present disclosure, a BS is a network-side device and may also be referred to as a second node/IAB node/x-NodeB (where x may be an abbreviation related to radio access technology (RAT))/TRP. The BS may be a physical node or a logical node. The BS may be a network-side endpoint or an intermediate point between other endpoints. In communication (including one-to-one, many-to-one, one-to-many, and many-to-many communication) between two points which are not limited to endpoints, the BS may be a serving node. The BS may be a fixed node or an unfixed node in terms of location.

In the present disclosure, a higher layer parameter may be a parameter that is configured for a UE, pre-configured, or pre-defined. For example, a BS or network may transmit a higher layer parameter to a UE. The higher layer parameter may be transmitted via RRC (Radio Resource Control) signaling or MAC (Medium Access Control) signaling.

In the present disclosure, "configured or defined" may be interpreted as being configured or pre-configured for a device through predefined signaling (e.g., SIB, MAC, RRC) from a BS or network or as being preconfigured for the device. In the present disclosure, "configured or defined" may be interpreted as being preconfigured for the device.

The technologies proposed in the present disclosure may be used in various wireless communication systems such as CDMA (Code Division Multiple Access), FDMA (Frequency Division Multiple Access), TDMA (Time Division Multiple Access), OFDMA (Orthogonal Frequency Division Multiple Access), and SC-FDMA (Single Carrier Frequency Division Multiple Access). CDMA may be implemented as wireless technologies like UTRA (Universal Terrestrial Radio Access) or CDMA2000. TDMA may be implemented as wireless technologies like GSM (Global System for Mobile Communications)/GPRS (General Packet Radio Service)/EDGE (Enhanced Data Rates for GSM Evolution). OFDMA may be implemented as wireless technologies like IEEE (Institute of Electrical and Electronics Engineers) 802.11 (Wi-Fi), IEEE 802.16 (WiMAX), IEEE 802-20, E-UTRA (Evolved UTRA), LTE (Long Term Evolution), and 5G NR.

The technologies proposed in the present disclosure may be implemented as 6G wireless technology and applied to various 6G systems. For example, 6G systems may have key factors such as eMBB (enhanced Mobile Broadband), URLLC (Ultra-Reliable Low Latency Communications), mMTC (massive Machine-Type Communication), AI (Artificial Intelligence) integrated communication, tactile internet, high throughput, high network capacity, high energy efficiency, low backhaul and access network congestion, and enhanced data security.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response

- SDT: Small Data Transmission
- LP-WUS: Low Power Wake-Up Signal
- XR : Abbreviation for eXtended Reality. VR(virtual reality), AR(augmented reality), MR(mixed reality)
- RRM : Radio Resource Management

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

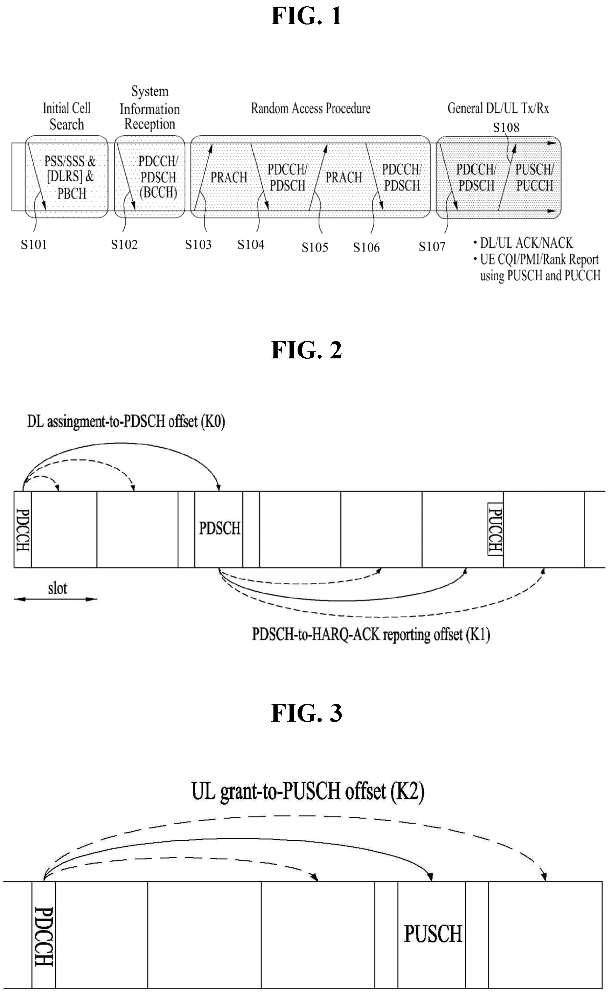

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S 102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 2 illustrates an exemplary PDSCH reception and ACK/NACK transmission process. Referring to FIG. 2, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1.

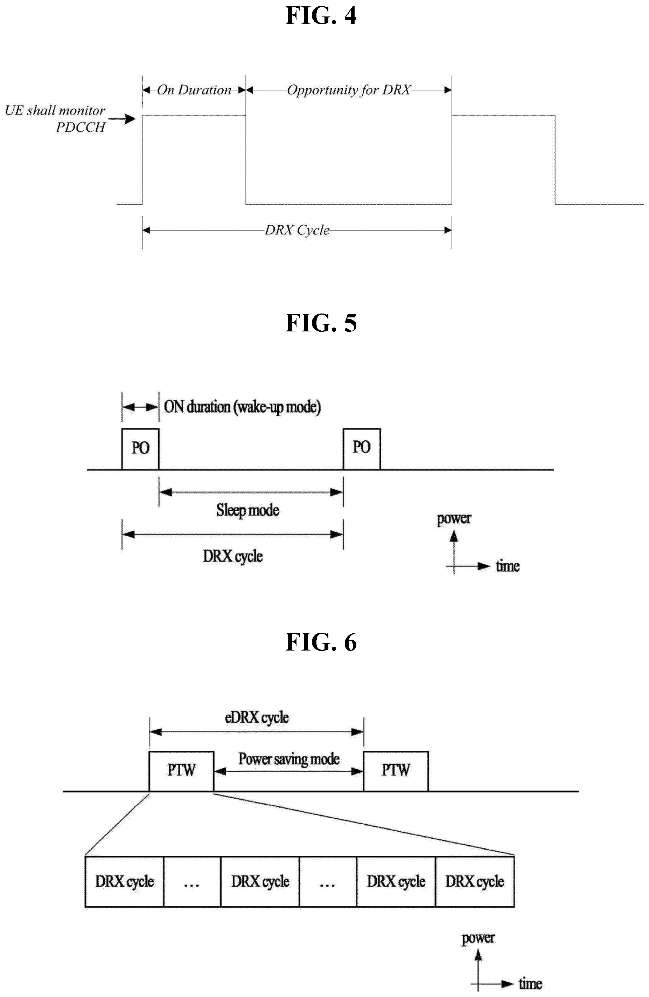

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

FIG. 3 illustrates an exemplary PUSCH transmission procedure. Referring to FIG. 3, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:
  (SFN + PF_offset) mod T = (T div N)*(UE_ID mod N)
- An index i_s indicating the index of the PO is determined by:
  i_s = floor(UE_ID/N) mod Ns

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 4 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 4, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the aforedescribed/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

(2) RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

FIG. 5 illustrates an exemplary DRX cycle for paging.

Referring to FIG. 5, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 6 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 5 may be included in the PTW duration. The number of DRX cycles in the PTW duration may be set by the BS through a higher layer (e.g., RRC) signal.

**WUS (Wake-up signal)/PEI (Paging Early Indication)**

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

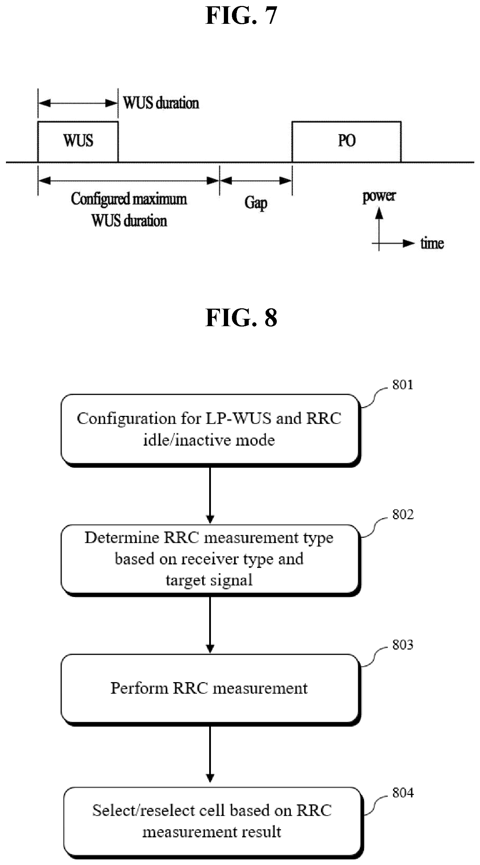

FIG. 7 is a diagram illustrating a WUS in an LTE system. Referring to FIG. 7, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## **LP-WUR and LP-WUS**

In the present disclosure, main radio will be referred to as MR and a low-power wake-up receiver will be referred to as LP-WUR or LR, according to the terminology used in LP-WUS-related standardization discussions.

- MR refers to a general receiver for signal reception in an NR UE, and the MR may be used to receive an NR OFDM signal. That is, a receiver of a UE in the current NR standard may be understood as an MR.
- LP-WUR refers to a receiver that may be newly added to a UE to receive a low-power signal. Newly designed low-power signals such as an LP-WUS or a low power synchronization signal (LP-SS) may be received through the LP-WUR. The LP-WUR may have characteristics of lower cost and lower power consumption, compared to the MR.

Specifically, according to the current NR standard, a UE should periodically wake up every N DRX cycles (where N may be 1), which accounts for a significant portion of power consumption in a period during which there is no signal or information transmission. When the MR of the UE is capable of waking up only when it is triggered (e.g., to perform a paging operation), the power consumption of the UE may be significantly reduced. To this end, an LP-WUS may be used to trigger the MR, and the LP-WUS may be received by introducing a separate receiver, the LR, which may operate with ultra-low power consumption.

LR signals such as the LP-WUS or LP-SS may be configured/transmitted differently from MR signals in the time/frequency domain. For example, LR signals such as the LP-WUS/LP-SS may be modulated with on-off keying OOK. OOK-modulated LR signals are aligned to the boundaries of time resources (e.g., slots or symbols in the time domain), but may be transmitted without alignment to the boundaries of frequency resources (e.g., REs or subcarriers in the frequency domain). For example, the LP-WUS may be configured to represent the presence or absence (1/0) of a signal within a specific time duration, and the UE may receive the LP-WUS only through energy detection (or envelope detection) of the LP-WUS within the specific time duration.

The OOK symbol of the LP-WUS may be overlaid with i) a sequence for spectrum flattening, ii) an OFDM sequence for increasing transmission coverage, and/or iii) an OFDM sequence for additional information transmission. In the case of ii)/iii), the LR signal may be an OOK sequence detectable through envelope detection, and ON symbols of the sequence may consist of OFDM-modulated symbols. Particularly, in the case of iii), if OFDM demodulation is possible for the OFDM overlaid OOK sequence, additional meaningful information bits may be obtained.

The LR signal may be either a general OOK signal (without overlaid OFDM) or an OFDM overlaid OOK signal. The LP-WUR of the UE may be defined as two types.

- LP-WUR Type #1: A wake-up receiver capable of energy detection only
- LP-WUR Type #2: A wake-up receiver capable of OFDM sequence detection

LP-WUR Type #1 is a wake-up receiver configured with low cost, which is only capable of determining the presence or absence of a signal (e.g., energy detection or envelope detection). Therefore, it is a receiver capable of detecting only an OOK signal (e.g., a general OOK signal or an OOK signal part excluding overlaid OFDM in an OFDM overlaid OOK signal).

LP-WUR Type #2 is a wake-up receiver with a higher cost than Type #1, which is capable of detecting an OFDM sequence and energy detection as well. Therefore, it is a receiver capable of detecting/decoding not only a general OOK signal without overlaid OFDM, but also an OFDM overlaid OOK signal. Further, it may also be configured to be capable of receiving the PSS/SSS of a legacy NR signal.

## **RRM measurements based on a plurality of target signals**

A UE should perform an RRM measurement through an MR every predetermined period. For example, a UE in an RRC idle/inactive state generally has to wake up and receive a signal at least once every 1 or 2 DRX cycles for mobility management, and this operation accounts for a large portion of power consumption during a period without signaling or data traffic.

If the UE is capable of receiving a signal (e.g., paging) with a longer periodicity than one DRX cycle (e.g., every $N^{th}$ DRX cycle instead of every DRX cycle, where N > 1), power consumption may be significantly reduced. For example, when the UE is able to maintain a power-off (or sleep) state of the MR for a longer time by skipping at least some of periodic RRM measurements of the MR, it may be effective in reducing the power consumption of the UE.

Although eDRX with a long periodicity may be considered for this purpose, it may be unsuitable for services requiring both low latency and a long battery life because high latency is unavoidable in this case.

As described later, if an LR that consumes very low power is capable of taking over at least some of RRM measurements/signal reception operations of the MR, the power consumption of the UE may be significantly reduced while satisfying lower latency than eDRX.

With the introduction/operation of the LR, the MR may operate in an 'ultra-deep sleep' state, which is a state of consuming very low power. Assuming that the power of the MR in the deep sleep state is 1, the relative power of the MR in the ultra-deep sleep state is 0.015, which may be similar to power consumption in the power-off state. A total time required for the MR to transition from the ultra-deep sleep state to an active/micro sleep state may be expressed as the sum of a ramp-up time and a time for synchronization/resynchronization. The ramp-up time may refer to a time for hardware tuning, such as MR booting and memory loading. The time for synchronization/re-synchronization may refer to a time required for the MR to perform a synchronization/re-synchronization procedure with a BS. For details of the ultra-deep sleep state, 3GPP TR38.840 may be referred to.

As the MR maintains the power-off state or the ultra-deep sleep state for a longer time, there may be a greater gain in terms of power saving. To this end, an RRM measurement of the MR may be replaced by an RRM measurement of the LR or offloaded to the LR, and in this case, the UE may perform the RRM measurement of the MR with a longer periodicity than before. It may generally be assumed that the RRM measurement of the LR consumes relatively very little power compared to the RRM measurement of the MR in the UE.

Signals received by the MR and the LR to perform an RRM measurement will be referred to as RRM measurement target signals or simply target signals.

According to an embodiment, the UE may receive different target signals through the MR and the LR to measure cell quality. To this end, a method for configuring an RRM measurement target signal for an MR/LR in a cell supporting an LP-WUS is proposed.

The RRM measurement target signals may include at least one of the following signals.

(1) LP-SS and LP-WUS

The LP-SS refers to a signal received by the LR, separately from the MR, to maintain synchronization. The LP-SS and the LP-WUS are low-power signals designed to be smoothly receivable by the LR.

(2) PSS/SSS

The PSS and the SSS, which are two signals within an SSB excluding a PBCH, are synchronization signals receivable by the MR. They are general target signals for an RRM measurement of the MR and are used to measure SS-RSRP. SS-RSRP is defined as a linear average of power contributions [W] of REs carrying an SSS. Time resources for measuring SS-RSRP may be limited to within an SMTC window. A CSI-RS may also be used as an additional signal for SS-RSRP determination. Details of SS-RSRP measurement of the MR are defined in 3GPP TS38.215.

The PSS and the SSS are also discussed as candidate signals that the LR may receive for measurement, and there is a possibility that a PBCH DMRS may be used as an auxiliary.

(3) TRS (Tracking Reference Signal)

Originally, the TRS is a signal intended for a UE to continuously track and compensate for a time/frequency offset. However, with the introduction of an operation in which a UE in idle/inactive mode receives a TRS instead of an SSB to synchronize for paging as instructed by a PEI, the TRS may be discussed as one of RRM measurement target signal candidates alongside the PSS/SSS.

In an embodiment, an operation of performing an RRM measurement by distinguishing receiver types and thus distinguishing corresponding target signals is proposed. In this case, the target signals may be categorized by SS-RSRP and LP-RSRP, which are final RRM measurement results. SS-RSRP is a result of measuring the PSS/SSS (potentially assisted by the PBCH DMRS) and the TRS by the UE. LP-RSRP is a result of measuring the LP-SS and the LP-WUS by the UE.

In an embodiment, a method for obtaining two measurement results, SS-RSRP and LP-RSRP, through two receiver types, the MR and the LR, is described, and RRM measurements may be classified into the following four types by combining the receiver types and the measurement results.

(1) First Type RRM Measurement: Measuring the SSB as a target signal through the MR. The first type measurement may be an operation of performing an RRM measurement in the idle/inactive mode in the current standard.
(2) Second Type RRM Measurement: Measuring the LP-SS as a target signal through the LR.
(3) Third Type RRM Measurement: Measuring the SSB as a target signal through the LR.
(4) Fourth Type RRM Measurement: Measuring the LP-SS as a target signal through the MR.

Although the following description is given in the context of periodic RRM measurements, the present disclosure is not limited thereto and may be extended to all signals that the UE receives with a specific periodicity. The proposed methods may be applied to all types of transmission and reception methods expected by the BS and the UE, even without separate description. Even if only one of the power-off state and the ultra-deep sleep state is described below, the two states are similar in that the MR does not completely receive a signal and requires a specific transition time, and thus the description may be applied to both. Further, although the following description is given mainly in the context of an RRM measurement operation in the RRC idle/inactive mode, it may also be applied to the RRC connected mode.

The UE performs an RRM measurement on a serving cell at least once every M1*N1 DRX cycles. Generally, an RRM measurement may be to measure RSRP and RSRQ for a specific signal (e.g., SSB) and calculate a cell selection RX level, that is, Srxlev based on the measurement. When an SMTC periodicity exceeds 20ms and a DRX cycle is 0.64 seconds or less, M1 is 2, and otherwise, M1 is 1. N1 is a scaling factor determined by the length of the DRX cycle and the power class of the UE. For more details, the standard document TS38.133 is referred to.

For convenience of description, a DRX cycle greater than 0.64 seconds, an SMTC periodicity less than 20ms, and FR1 are assumed (M1=1 and N1=1). Under this assumption, it may be said that the UE performs an RRM measurement every DRX cycle. However, although the proposed operations are described based on the operation of performing an RRM measurement every DRX cycle, they may also be applied to a case of performing an RRM measurement every N1*M1*DRX cycle.

Although the NR system is used as an example below, the proposed methods are not limited to a specific transmission and reception form of NR. Further, although the description is based on the characteristics and structure of a UE configured with DRX, the application of the proposed methods is not limited to UEs configured with DRX. The proposed methods may be applied to all wireless communication transmission and reception structures and services.

The distinctions between the schemes or options in the following description are made for clarity and should not be restrictively interpreted to mean that each should be implemented independently. For example, the schemes/options described below may be implemented individually, but at least some of them may also be implemented in a combination, unless conflicting with each other.

**[Proposal 1] Method for interpreting/using different measurement result values**

Four types of measurement methods are proposed to measure the quality of a serving cell. These four types of measurements may be performed according to situations, taking into account the type of a current active receiver of the UE and the coverage of the serving cell. For example, when the UE is currently operating with the MR, the result value of the first type of RRM measurement may be used as a criterion for deactivating the MR and activating the LR. Alternatively, the result value of the fourth type of RRM measurement may be used as the criterion. Further, when the UE is currently operating with the LR, the result value of the second type of RRM measurement may be used as a criterion for activating the MR due to insufficient LR coverage and hence unreliable signal reception.

According to the current standard, a cell selection criterion based on the cell quality measurement of the UE is given by Equation 1.

[Equation 1]

$$\text{Srxlev} > 0 \text{ AND Squal} > 0$$

$$\text{Srxlev} = Q_{rxlevmeas} - (Q_{rxlevmin} + Q_{rxlevminoffset}) - P_{compensation} - Q\text{offset}_{temp}$$

$$\text{Squal} = Q_{qualmeas} - (Q_{qualmin} + Q_{qualminoffset}) - Q\text{offset}_{temp}$$

Table 1 briefly describes the meaning of each parameter in Equation 1. For more details, the standard document TS38.304 is referred to.

[Table 1]

| Srxlev | Cell reselection RX level value (dB) |
|---|---|
| Squal | Cell reselection quality value (dB) |
| $Qoffset_{temp}$ | Offset temporarily applied to cell (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum RX level value required for the cell (dBm) |
| $Q_{qualmin}$ | Minimum quality level value required for the cell (dB) |
| $Q_{rxlevminoffset}$ | Offset for signaled $Q_{rxlevmin}$ |
| $Q_{qualminoffset}$ | Offset signaled for $Q_{qualmin}$ |
| $P_{compensation}$ | For FR1, if the UE supports additionalPmax: $\max(P_{EMAX1} - P_{PowerClass}, 0) - (\min(P_{EMAX2}, P_{PowerClass}) - \min(P_{EMAX1}, P_{PowerClass}))$ (dB); otherwise, $\max(P_{EMAX1} - P_{PowerClass}, 0)$ (dB)<br>For FR2, 0 |
| $P_{EMAX1}, P_{EMAX2}$ | Maximum TX power level used by the UE for UL transmission in the cell |
| $P_{PowerClass}$ | Maximum RF output power according to power class of the UE (dBm) |

Srxlev and Squal represent a cell selection RX level value and a cell selection quality value, respectively, and when both of these values are greater than or equal to 0, the UE determines that Equation 1 is satisfied. Actual measured values of the UE are Qrxlevmeas and Qqualmeas, which correspond to SS-RSRP and SS-RSRQ measured by the UE in the idle/inactive mode. That is, the UE measures RSRP and RSRQ, performs an operation for specific values predetermined for the cell, and determines whether the cell selection condition in Equation 1 is satisfied.

Since the proposed four types of RRM measurements are measurements of different target signals using different receiver types, it may not be appropriate to compare the result values of different types of RRM measurements directly without correction. Therefore, a method for interpreting/using different types of measurement results by comparing them is proposed.

[Proposal 1-1] Direct comparison of different types of measurement results

To compare the results of different types of measurements, an offset $Q_{offsetLP}$ may be introduced. For example, $Q_{offsetLP}$, which may have different values depending on the measurement type, may be introduced as in Equation 2 by modifying Equation 1 which calculates S_rxlev and S_qual for determining a cell selection criterion.

[Equation 2]

$$Srxlev = Q_{rxlevmeas} - (Q_{rxlevmin} + Q_{rxlevminoffset}) - P_{compensation} - Qoffset_{temp} - Qoffset_{LP}$$

$$Squal = Q_{qualmeas} - (Q_{qualmin} + Q_{qualminoffset}) - Qoffset_{temp} - Qoffset_{LP}$$

Accordingly, the basis for determining the cell selection criterion may be different for different types of measurements. For example, there may be a case where the UE operates with the MR in the idle/inactive mode and measures serving cell quality based on an SSB (the first type of RRM measurement), and a case where it operates with the LR and measures serving cell quality based on an LP-SS (the second type of RRM measurement). When the result value of the first type of RRM measurement satisfies the cell selection criterion, and the cell quality is good enough to allow the UE to operate with the LR, or the coverage of an LP-WUS is considered sufficient, the UE may stop the operation of the MR and operate with the LR. Thereafter, the UE may use the second type of RRM measurement to determine whether to continue operating with the LR in the current cell and/or whether to reselect a new cell due to insufficient quality of the current serving cell.

For example, it may be desirable to set $Qoffset_{LP}$ for the first type of RRM measurement to a smaller value than $Qoffset_{LP}$ for the second type of RRM measurement. This may be a result of reflecting the fact that the LR generally has poor signal measurement performance and the reception coverage of the LP-SS/LP-WUS is insufficient, compared to an MR signal (a legacy NR signal).

The thresholds Srxlev and/or Squal used to determine whether to maintain the current measurement state may be set differently according to the RRM measurement types by using the newly proposed offset parameter, $\text{Qoffset}_{LP}$.

Alternatively, although the cell selection criterion of Equation 1 is reused, an offset $Q_{rxlevminoffset}$ and/or a compensation value $P_{compensation}$ reflected in Equation 1 may be set differently depending on the RRM measurement types.

Proposed new offset parameter values and/or new values to be applied to the existing offset/compensation parameters may be predefined, set through system information, or set by dedicated RRC signaling. The new offset parameter values and/or the new values to be applied to the existing offset/compensation parameters may also be set separately by frequency, band, or beam.

Additionally, when the results of different types of measurements corrected through a proposed method are the same, a result measured by the MR, that is, a result value of the first type of RRM measurement or the fourth type of RRM measurement may have a higher priority.

For the RRC connected mode, a method of reporting the result values of different types of measurements without applying the above proposed method so that the BS may correct them may be applied. Unlike the RRC idle/inactive mode, in the RRC connected mode, the UE transmits/receives UL/DL information to/from the BS, and reports the result values, so that the BS may determine the situation of the UE and correct them. In other words, the UE may calculate and report Srxlev and Squal according to the existing type of measurement, and the BS may then apply the proposed correction method. For example, the UE in the RRC connected mode may measure SS-RSRP with the LR (the third type of RRM measurement) and report it, while receiving data using the MR. This may be for allowing the LR to perform the RSRP measurement of the MR and thus facilitate smoother data reception. Alternatively, this type of measurement may be reported using an event-triggered mechanism. For example, the result of the third type of RRM measurement may trigger a specific Event A2 (serving becomes worse than threshold).

[Proposal 1-2] Indirect comparison of different types of measurement results

A method for indirectly comparing the results of different types of measurements may be introduced. The UE may select one of best ranked cells based on the different types of measurement results as a final best ranked cell. For example, the UE determines a cell selection criterion (identical to the current standard definition) for each of the different types of measurements. Based on the results of the different types of measurements, the UE determines a best ranked cell when measured by the LR and a best ranked cell when measured by the MR. The UE may select one of the two best ranked cells based on UE implementation, or it may prioritize the best ranked cell based on the result measured by the MR. For example, when there is no best ranked cell satisfying the criterion when measured by the MR, the best ranked cell based on the result measured by the LR may be the finally selected cell.

Alternatively, separate cell selection criteria may be configured for the LR and the MR. For example, separate values for $Q_{rxlevmin}$, $Q_{rxlevminoffset}$, $Q_{qualmin}$, and $Q_{qualminoffset}$ in Equation 1 of the cell selection criterion may be set separately for the LR and the MR. Based on this, the UE determines the best ranked cell for each measurement type. When there is only one cell satisfying the criterion, the UE selects that cell. When there are multiple cells satisfying the criterion, it may prioritize and select the cell based on the measurement value of the MR. That is, the priority of a best ranked cell for each type of measurement may be predetermined.

Proposal 1-1 selects one best ranked cell from cells that satisfy the condition based on the results of different types of measurements, while Proposal 1-2 selects a best ranked cell for each measurement type from cells that satisfy the condition, based on the results of the different types of measurements, and then finally selects one cell based on priority.

The proposed new offset value or the new values to be set for the existing cell selection criterion parameters may be predefined in the standard, set through system information, or set by dedicated RRC signaling. The proposed new offset value or the new values to be set for the existing cell selection criterion parameters may also be set separately by frequency, band, or beam.

Further, when the proposed method is applied, if the results of different types of measurements have the same value, a result measured by the MR, that is, a result value of the first type of RRM measurement or the fourth type of RRM measurement may have a higher priority.

**[Proposal 2] Configuration of target signals in serving cell and corresponding** UE operation

[Proposal 2-1] Target signal configuration in serving cell

When the UE is able to perform an RRM measurement on each target signal using the MR or the LR, a period during which the target signals are transmitted in a serving cell may be divided and configured. For example, a period during which the LP-SS is transmitted in the serving cell and a period during which it is not transmitted may be configured. This may help reduce the resource waste of the serving cell, if the UE is able to perform all of the first to fourth type of RRM measurements. For example, the UE may perform a measurement based on a currently operating receiver (the MR or the LR) and a currently transmitted target signal, and when these change over time, it may perform different types of measurements accordingly. The results of the respective measurements may be compared as proposed in Proposal 1.

The period during which LP-SS is transmitted may be configured within a period when the SSB is not transmitted. This allows the UE to perform a measurement according to a currently transmitted target signal with a minimal delay at a required measurement time. For example, when the SSB is transmitted for 5ms every 20ms in the serving cell, the LP-SS may be transmitted during the 15ms period in which the SSB is not transmitted. Therefore, the target signals may be transmitted at all times in the serving cell. Alternatively, the LP-SS may be transmitted during only a part of the 15ms period in which the SSB is not transmitted. This may be a result of a BS configuration considering the resources in the serving cell.

The target signals may be transmitted together only during a specific time period. For example, the LP-SS and the SSB may be transmitted for 5ms every 20ms. In this case, there may be an advantage in terms of network energy saving.

The LP-SS may be transmitted at a position temporally close to the transmission of the SSB. The LP-SS may be transmitted during the same time period as the SSB, overlap with the SSB transmission period, or be transmitted during the closest subsequent time period.

The transmission periodicity and duration of each target signal may be configured independently.

These target signals may be configured considering cell discontinuous transmission (DTX). Cell DTX refers to an operation of transmitting a general signal only during an active period and transmitting only the SSB during an inactive period, for the purpose of network energy saving (NES). In this regard, the cell may be configured such that the BS transmits both the SSB and the LP-SS during the active period, and only the SSB (not the LP-SS) during the inactive period. Alternatively, the LP-SS transmission may be enabled during the inactive period. For example, the LP-SS transmission during the inactive period may be based on a BS configuration. Alternatively, a period during which the LP-SS may be transmitted may be guaranteed within the inactive period.

Accordingly, the UE may perform an RRM measurement according to a target signal transmitted during a corresponding time period.

[Proposal 2-2] Method for performing RRM measurement by UE

An operation of performing an RRM measurement by a UE when a target signal is configured in a serving cell according to Proposal 2-1 is proposed. The UE may perform RRM measurements for target signals configured in various types. These cases are proposed separately as follows.

(A) When the LP-SS (and/or the LP-WUS) is configured to be available for an RRM measurement, the UE measures the quality of the serving cell using the LR (or the MR).

When the transmission of the LP-SS/LP-WUS is supported and configured according to a configuration for the serving cell, the UE may use it as a target signal to perform an RRM measurement. The receiver type that may perform this RRM measurement may be the currently operating receiver.

For example, when the UE is operating with the MR mode in the RRC idle/inactive mode without operating with the LR, it performs an RRM measurement using the MR. The UE may activate the LR and transition the MR to the ultra-deep sleep state in order to save power, and perform the first type of RRM measurement or the fourth type of RRM measurement for this purpose. The target signal may be configured by the BS or selected by the UE. For example, when only one target signal is transmitted in a specific time period, it may be selected for a measurement. When multiple target signals are transmitted, the BS may set their priorities, or the UE may select one for a measurement depending on UE implementation.

Alternatively, a measurement may be performed using the LR. To stop the operation of the MR, a condition that the LR may smoothly receive a signal should be satisfied, and a measurement for this purpose may be more accurate when performed by the LR. Therefore, the UE performs the second type of RRM measurement or the third type of RRM measurement. In this case, the target signal may be configured by the BS or selected by the UE.

The receiver type that the UE uses for the measurement may be configured by the BS or depend on UE implementation. This may also be determined based on the power consumption of the LR in its active state.

(B) A target signal is determined based on a currently operating receiver (the MR or the LR), and the quality of a serving cell is measured using the target signal.

The UE determines a target signal for an RRM measurement based on a currently operating receiver (the MR or the LR) and measures the quality of a serving cell. For this purpose, the priorities of each receiver and target signal may be set. For example, the MR may be set to a higher priority than the LR. This means that when the UE is currently operating both the MR and the LR, the quality of the serving cell is measured by the MR. When the UE is currently operating only the LR, it performs a measurement using the LR. The UE uses a selected receiver to select a target signal with a higher priority for measurement. The priority of the target signal may be independent of the receiver type, or may be determined differently depending on the receiver type. For example, when the UE performs a measurement with the MR, the SSB may be determined as a high-priority target signal, and when it performs a measurement with the LR, the LP-SS may be determined as a high-priority target signal. Therefore, the UE operates with the MR and performs the first type or RRM measurement or the fourth type of RRM measurement. Based on a result value, the UE determine whether to transition the MR to the ultra-deep sleep state and transitions it. When the UE is operating with the LR, it performs the second type of RRM measurement or the third type of RRM measurement, and based on a result value, it determines whether to trigger wake-up of the MR and wakes it up.

(C) The quality of a serving cell is measured differently according to a configuration for a transmitted target signal.

As proposed in Proposal 1, a time period during which a target signal is transmitted may be configured in various ways. Therefore, the UE may perform a measurement differently according to the time period during which each target signal is transmitted.

For example, when a period during which the LP-SS is transmitted is shorter than a specific value (threshold) (e.g., when cell DTX is configured and an inactive period during which the LP-SS may be transmitted is short), the measurement using the LP-SS as a target signal may be prioritized. This may be for receiving the LP-SS and measuring cell quality using the LP-SS because the LP-SS is transmitted infrequently. However, this may be limited to the case where the UE is operating with the MR. This may be a situation where while the UE is operating with the MR, the UE measures cell quality to see if it may receive he LP-SS/LP-WUS reliably using the LR, anticipating the transition of the MR to the ultra-deep sleep state.

When a period during which the LP-SS is not transmitted is short (the inactive period of cell DTX is short), an RRM measurement may be omitted during a specific period, when the measurement is performed for the LP-SS as a target signal. This may be for temporarily stopping the measurement with the LR during the period when the LP-SS is not transmitted and wait for the next LP-SS transmission, because the period during which the LP-SS is not transmitted is not long.

When the period during which LP-SS is not transmitted is long (the inactive period of cell DTX is long), the UE may perform the first type of RRM measurement or the third type of RRM measurement because the period during which only the SSB is transmitted is long. When the UE is currently operating with the LR but determines to perform the first type of RRM measurement, it involves triggering wake-up of the MR and waiting for the transition time from the ultra-deep sleep state (e.g., 400ms). Accordingly, it may be configured to operate in this way, only if a specific condition is satisfied. This may be the case when a time point when the next LP-SS transmission may be expected is greater than the transition time by a specific value or more, or when the reception period of the LP-SS is longer than or equal to a specific value. Further, the operation may differ depending on whether the UE knows the length of the period during which the LP-SS is not transmitted. When the UE does not know the length of the period during which the LP-SS is not transmitted, it may be appropriate for the UE to perform a measurement according to a currently operating receiver and a currently transmitted target signal.

When the UE transitions from a period during which a specific target signal is not transmitted to a period during which the target signal is transmitted in order to perform a measurement on the specific target signal with priority, a predetermined number of transmissions may be guaranteed for the target signal. This may be to allow the UE to perform measurements based on the guaranteed number of transmissions regardless of a periodicity, during the transition to the target signal transmitting period, since the UE may wait for that target signal transmission if the target signal is set to a high priority for measuring cell quality, as described above. Further, a predetermined number of transmissions may be guaranteed during transition from the transmitting period to the non-transmitting period of the target signal, regardless of the periodicity.

When an event (e.g., handover) is triggered at the UE, the UE always transmits a report of a result value and the triggered event (e.g., by an RRC message on a PUCCH or a PUSCH), regardless of cell DTX and UE DRX.

When the length of a period during which a specific target signal, for example, the LP-SS is transmitted is greater than or equal to a specific value, even if measurement using the specific target signal has a high priority, it may take a long time for the UE to receive the target signal. Therefore, the UE may be configured to measure cell quality using a different target signal during a period in which target signal is not transmitted. For example, when the length of a cell DTX inactive period is greater than or equal to a specific value, and the LP-SS is a high-priority target signal, an RRM measurement may be performed on the SSB during the cell DTX active period.

(D) The UE may perform a cell quality measurement operation based on an indication of the BS.

The UE may perform the cell quality measurement operation according to the form of an indication given by the BS, in addition to a method preconfigured by the BS. For this purpose, a method for transmitting an indication to a UE by a BS is proposed.

When the UE is operating with the LR, it may receive an indication through the LP-SS or the LP-WUS. When the UE is in the idle/inactive mode, operating with the MR, it may perform an operation of switching to the LR by determining cell quality as a condition without an explicit indication.

The BS may inform the UE that the LP-SS will not be transmitted for a specific period of time or until it is reactivated. In this case, since the UE is aware that the LP-SS, one of the target signals is not transmitted, it may measure cell quality using another target signal during that time period. Which receiver is used to perform this operation may be the currently operating one or depend on UE implementation. Since there is no acknowledgement (ACK) or feedback for the indication from the UE, informing the UE of the absence of transmission of the corresponding target signal for a specific period may be a safer method to prevent UE malfunction.

The way the UE initiates a measurement may follow a semi-static indication, such as system information (SIB) of a cell.

The UE may request the transmission of the LP-WUS, and the LP-WUS transmission of the BS may be determined based on the request. For example, this may be identified by a preamble, similar to the on-demand SIB in the current standard. During initial access to the cell, the UE identifies whether the cell supports the LP-WUS through system information (e.g., SIB1). When the UE then wants to perform an operation using the LP-WUS, it performs an RACH (msg1) using a specific preconfigured preamble. In this case, an SI request preamble or a separate distinctive resource may be used. Subsequently, the UE receives up to msg2 (random access response (RAR)) and terminates the procedure, or it receives up to msg4 but does not transition to the RRC connected mode.

When system information for the LP-WUS is not broadcast in the cell, a UE request in the form of an on-demand SIB may be required. When the corresponding information is in SIB1, a request for the LP-WUS transmission may be performed even if it is not currently broadcast.

If system information for the LP-WUS is not broadcast in the current cell due to cell reselection, but the UE already has the system information, it needs to receive SIB1 to identify whether the LP-WUS transmission is activated in the current cell. Alternatively, if the UE attempts to receive the LP-SS for a predetermined period (e.g., a default period) in the cell, the UE may use this to acquire synchronization or perform an RRM measurement. When the UE identifies the absence of an LP-SS transmission, it may then request the LP-SS from the BS.

Subsequently, when the transmission of the LP-WUS is deactivated or not supported through system information update of the cell, the UE deletes the corresponding configuration (e.g., including the RACH preamble).

When the UE operates according to Proposal 2, the BS may configure transmission or non-transmission of each target signal separately, thus saving time/frequency resources for transmission of the target signal. Further, because cell quality measurements may be performed based on multiple target signals, measurement accuracy may be expected to improve. Further, a criterion for determining the relaxation of RRM measurement execution may be added for power saving when the UE operates with the MR, which may help to determine this using various criteria.

## [Proposal 3] LP-SS transmission configurations distinguished by purposes

The LP-SS, the introduction of which is under discussion to use the LP-WUS/LP-WUR, may serve one or more purposes. That is, while operating with the LR, the UE may use the LP-SS for the purpose of an RRM measurement to measure the quality of a corresponding cell, and for the purpose of acquiring subsequent synchronization for the LR. Therefore, an LP-SS transmission may be configured separately according to the purpose for which it is used.

An RRM measurement requirement and a synchronization requirement of the UE may be considered separately. For example, the UE should perform an RRM measurement every 1 or 2 I-DRX cycles in the current standard. While this may be relaxed for power saving, it may be desirable to be set based on a multiple of an I-DRX cycle configured for the UE. For the LR synchronization purpose, the goal is to smoothly receive the LP-WUS, and thus it may be desirable to be set based on transmission occasions of the LP-WUS.

Accordingly, considering the relaxed RRM measurement requirement of the UE, it may be guaranteed that the LP-SS is transmitted at least once per specific period, and the LP-SS is transmitted aperiodically based on the LP-WUS transmission occasions. Alternatively, the LP-SS may be configured to always be transmitted within a specific window or time period, and occasions where LP-WUS may or may not be transmitted may be configured outside the specific window or time period. Each case may be used based on the RRM measurement and synchronization purposes.

Based on these configurations, the UE may separately configure (i) an MR operation for paging and a condition for transitioning to the power-saving state, and (ii) an MR operation for an RRM measurement and a condition for transitioning to the power-saving state. When both the paging (i) and (ii) the RRM measurement satisfy the condition for transitioning to the power-saving state, the UE may perform the transition to the power-saving state.

For example, the UE may operate as follows. The UE performs the first type of RRM measurement, and when a predetermined condition is satisfied, it transitions the MR operation for paging to the power-saving state. Subsequently, the UE performs the second type of RRM measurement, and when a predetermined condition is satisfied, it transitions the MR operation for an RRM measurement to the power-saving state. Since both conditions are satisfied, the UE transitions the MR to the ultra-deep sleep state. The UE may receive the LP-WUS through the LR and determine whether to perform MR wake-up triggering based on the LP-WUS. The order of determining whether the paging-related operation and the RRM measurement-related operation satisfy the condition may also be set in reverse, and may be determined independently.

**[Proposal 4] LR-based cell quality measurement operation**

[Proposal 4-1] UE operation based on extended measurement condition

The UE for which the LP-WUR/LP-WUS is introduced operates to reduce power consumption by transitioning the MR to the ultra-deep sleep state under a specific condition, and to receive an MR wake-up trigger indication through the LP-WUS, while operating with the LR. Generally, when it is determined that the quality of the serving cell is sufficiently good based on an SSB measurement of the MR (the first type of measurement), the UE starts to operate the LR, considering that there will be no problem with receiving the LP-SS/LP-WUS. Herein, other additional conditions are proposed for starting the LR operation, besides those based on the result value of the first type of RRM measurement.

The speed of the UE may be included in the conditions for the UE to operate with the LR. For example, when the UE is at a high speed, it may be more desirable for the UE to operate with the MR. This may consider the potential degradation in reception performance due to the Doppler effect when the speed of the UE is high. For this purpose, the UE may determine whether to transition the MR to the ultra-deep sleep state by considering both the result value (SS-RSRP or LP-RSRP) of a general measurement and the result value of mobility speed estimation performed by the MR.

The slope of RSRP (or RSRQ) may be included in the conditions for the UE to operate with the LR.

The slope of RSRP (or RSRQ) may be used. Since the UE should perform an RRM measurement at least once per specific period, a previously measured result value may be compared with a result value measured in a current period. Therefore, the variation between the result value (RSRP or RSRQ) measured in the previous period and the result value measured in the current period may be used to determine whether to transition the MR to the ultra-deep sleep state. This may be determined by the variation of the result value of a measurement type currently performed by the UE, regardless of the measurement type. Another method is to determine it by the variation between two measurement result values measured with a time gap within a single period, rather than across different periods (typically I-DRX cycles).

[Proposal 4-2] Condition for applying RRM measurement relaxation

A condition is defined, for relaxing the requirement that a UE conforming to Rel-16 and Rel-17 should perform an RRM measurement every 1 or 2 I-DRX cycles, as represented by Equation 3.

$$[\text{Equation 3}]$$

$$\text{Low mobility: } (\text{Srxlev}_{Ref} - \text{Srxlev}) < S_{SearchDeltaP}$$

Not at cell edge: Srxlev > S SearchThresholdP, and Squal > S searchThresholdQ, if $S_{SearchThresholdQ}$ is configured

In other words, this may be interpreted to mean that when the movement of the UE is small or the UE is located in the center of the cell (an area with good coverage), the RRM measurement periodicity may be increased.

A new condition may be introduced to determine whether to apply RRM measurement relaxation for a UE supporting the LP-WUS. The result value of a measurement of the LP-SS as a target signal may be introduced as a condition for the UE to determine the termination of measurement relaxation.

For example, the UE measures cell quality in the LP-SS as a target signal by using the LR independently of the MR (the second type of RRM measurement) to determine the measurement relaxation condition. When the measurement result is better than a specific threshold, it may be a basis for starting RRM measurement relaxation. Alternatively, when the result value is not better than the specific threshold, it may be used as a basis for terminating RRM measurement relaxation.

In another example, the UE performs the fourth type of RRM measurement independently of the first type of RRM measurement originally performed by the UE to determine the measurement relaxation condition. When the measurement result is better than a specific threshold, it may be a basis for starting RRM measurement relaxation. Alternatively, when the result value is not better than the specific threshold, it may be used as a basis for terminating RRM measurement relaxation.

[Proposal 4-3] Inter-frequency measurement using LR

The use of the LR for a cell quality measurement in a different frequency may be considered. Therefore, when the MR and LR of the UE operate in different frequencies/carriers, when RRM measurement offloading is possible needs to be defined and configured.

Whether RRM measurement offloading is possible may be configured using a mapping relationship through system information. Since an SIB includes an inter/intra-frequency configuration, this may be used. For example, when it is configured that RRM measurement offloading between specific carriers is possible using the LR, and the UE receives this configuration through an SIB, the may perform RRM measurement offloading using a corresponding mapping relationship.

The mapping configuration may also include information about offsets (correction for comparing different measurement results, as proposed in Proposal 1). For example, different offsets may be set for cell group 1 and cell group 2, and when RRM measurement offloading is performed for a cell belonging to a corresponding group, the set offset value may be used.

[Proposal 4-4] Neighbor cell measurement using LR

The UE may use the LR to measure the quality of a neighbor cell rather than the serving cell. A specific time period (e.g., a window period) during which the UE may perform a measurement on the neighbor cell using the LR may be configured. This may be configured similarly to an SMTC window used by an RRC connected mode UE to perform a measurement on a different frequency.

This is named an LP-SS based measurement timing configuration (LMTC). The LMTC may be a time period during which the UE performs a neighbor cell measurement using the LR. A UE operation is defined when a configured LMTC overlaps with the SMTC. Since this is a BS configuration, the operation in an overlapping period may be predetermined or configured by system information. For example, when an overlapping period occurs, an SSB-based measurement may be configured to always take priority. Alternatively, it may be selected by UE implementation, considering a currently operating receiver of the UE. The UE may operate autonomously to satisfy a measurement requirement.

The result value of measuring the LP-SS of the neighbor cell according to the proposed method may be used to identify whether a current camping cell is the best ranked cell. When the UE determines that the camping cell is not the best ranked cell through the LR measurement process, a procedure may be needed to confirm this by measuring once more with the MR. For example, when determining that the camping cell is not the best ranked cell based on the measurement of the LR, the UE may wake up the MR to measure the cell, or identify the cell quality again by receiving and measuring one or more target signals with the MR. Alternatively, different types of measurements may be performed stepwise. For example, when the UE determines that the serving cell quality is poor through the second type of RRM measurement, it may then perform the third type of RRM measurement to confirm it again. Finally, the first type of RRM measurement may also be added.

The UE may require a configuration regarding whether the neighbor cell supports the LP-WUS. A list of cells that support the LP-WUS may be configured and indicated to the UE through system information. The UE may perform RRM measurements for the neighbor cells in the list.

The UE may perform measurements for the neighbor cells within the LP-WUS supporting cell list, based on the configured LMTC. To efficiently use resources or allow the UE to measure as many neighbor cells in the list as possible within a predetermined time period, LP-WUSs/LP-SSs transmitted from the neighbor cells may be multiplexed. Alternatively, a representative LP-WUS/LP-SS that the UE may receive may be configured for a subset of neighbor cells. This may be for allowing multiple measurements for co-located or closely located neighbor cells to be replaced by a single measurement result of a single representative cell.

**[Proposal 5] Directional transmission of LP-WUS**

Directional transmission is used for the SSB which the UE may receive for a measurement, to increase reception performance. For a general FR1 UE, SSB transmissions including the same information may be received in 4 or 8 directions, and the UE selects a direction with the best reception performance. This is generally referred to as beam transmission. The direction with the best SSB reception performance may also be used for reception in a subsequent other procedure.

For the LP-WUS, directional transmission may also be considered to enhance reception performance. The reception directionality of the LP-WUS may be based on the directionality of the SSB. That is, when receiving the LP-WUS, the UE selects the same direction as an SSB direction with the best reception performance. Therefore, the number of LP-WUS reception directions is the same as the number of SSB reception directions. When the MR of the UE transitions to the ultra-deep sleep state, the UE selects a direction with the best reception performance among SSBs previously received by the MR, and receives the LP-WUS in the selected direction using the LR.

Alternatively, the reception directionality of the LP-WUS may be based on the LP-SS. In this case, the LP-WUS and the LP-SS always have the same directionality, and the directionality of the LP-WUS/LP-SS may be related to the directionality of the SSB. For example, the directionality of the LP-SS may be a multiple of the directionality of the SSB. When the directionality of LP-SS is a multiple greater than 1 of the SSB directionality, this may be a consideration for the reception coverage of the LP-SS. This may mean that the LP-SS is transmitted sharply in more directions, and the reception coverage is larger. When the directionality of LP-SS is a multiple less than 1 of the SSB directionality, this may be a consideration for the transmission resources of the LP-SS. This may mean that the LP-SS is transmitted broadly in fewer directions, and since the overall number of transmissions is reduced, the used frequency/time resources may be smaller. The UE receives the LP-WUS based on the directionality of the received LP-SS.

In another method, the reception directionality of the LP-WUS may be determined based on the result values of a plurality of types of measurements. The LP-WUS may be received by selecting a direction with the highest quality based on all measurement results of the first type of RRM measurement, the second type of RRM measurement, the third type of RRM measurement, and the fourth type of RRM measurement. The result values that may be used for the determination may be limited to those performed within a predetermined time period. This may be because it is undesirable to reflect result values performed too long ago.

### [Proposal 6] Whether to perform RRM measurement by LR according to LP-SS transmission periodicity

When the UE performs an RRM measurement on the LP-SS as a target signal, its reliability may be lower than a result value of an RRM measurement of the SSB as a target signal. This may be attributed to the insufficient reception coverage of the LP-SS as a target signal or insufficient information included in the LP-SS, compared to the SSB. Therefore, to secure the same level of reliability as the result value of the RRM measurement of the SSB as a target signal, that is, the result value of the first type of RRM measurement which is a method of the current standard, the RRM measurement of the LP-SS as a target signal may be repeatedly performed to increase its reliability.

It may be said that an RRM measurement using the MR is more reliable than an RRM measurement using the LR in the UE. This may be because the LR of the UE operates at a relatively low cost/low power, compared to the MR. Therefore, to secure the same level of reliability as the result value of the RRM measurement by the MR, that is, the result value of the first type of RRM measurement which is a method of the current standard, an RRM measurement may be repeatedly performed using the LR to increase its reliability.

Therefore, to secure the same level of reliability as the result value of the first type of RRM measurement which is a method of the current standard, the second type of RRM measurement, the third type of RRM measurement, and the fourth type of RRM measurement may require repeated executions.

Assuming that the UE operates by activating/deactivating the first type of RRM measurement and the second type of RRM measurement, when the UE measures the LP-SS as a target signal, the measurement needs to be performed repeatedly a predetermined number of times or more, as described above, which means that the LP-SS should be received a predetermined number of times or more. Thus, the LP-SS may need to be transmitted more often than the conventional SSB by a predetermined number of times or more within the same time period. For example, when the UE has a requirement to perform an RRM measurement at least once every 320ms, the conventional first type of RRM measurement may satisfy this with one execution, but the second type of RRM measurement may require N times of measurement to produce a result value that satisfies the requirement. Therefore, the LP-SS should be transmitted N or more times within one DRX cycle of 320ms for the UE to satisfy this.

Therefore, when the requirement for performing an RRM measurement is generally X ms, the LP-SS should be transmitted with a periodicity shorter than X/N ms to secure the same reliability as the conventional first type of RRM measurement. In other words, when the LP-SS is transmitted every Y ms, the requirement for the UE to perform an RRM measurement should be Y*N ms or greater to obtain a reliable result and secure a power saving gain by not activating the MR.

Only when the above requirement is satisfied, the UE may expect a power saving effect by performing the second type of measurement, instead of the first type of RRM measurement. That is, the UE may perform the second type of RRM measurement, only when the condition of Equation 4 is satisfied.

$$[\text{Equation 4}]$$

$$M1*N1*DRX \text{ cycle} > Y*N$$

Herein, Y is the transmission periodicity of the LP-SS, and N is the number of measurement repetitions required to secure sufficient reliability when measuring the LP-SS as a target signal.

When multiple DRX cycles are configured, the UE may perform the second type of RRM measurement, only when the corresponding condition is satisfied.

FIG. 8 is a diagram illustrating a UE operation according to an embodiment. The UE may be configured with information about an LP-WUS transmission and its target signal, and an operation in RRC idle/inactive mode using it, and perform measurements for a plurality of target signals using a plurality of receiver types based on this.

Referring to FIG. 8, the UE is configured with information related to an LP-WUS transmission and a UE operation in idle/inactive mode (801). The configuration may include a transmission periodicity of a target signal for which an RRM measurement may be performed in a cell. It may also include information related to an LP-WUS transmission in a neighbor cell. Based on this information, a UE operation that may be performed in the idle/inactive mode may be configured. The configured UE operation includes an RRM measurement operation that may be performed based on a receiver type and a target signal, and an operation within an LMTC for performing a measurement on a neighbor cell.

The UE determines an RRM measurement type to perform, considering an operating receiver type or a target signal (802). This may correspond to Proposal 2 or Proposal 3. That is, it may be determined considering a currently transmitted target signal, an operating receiver type, and an indication of a BS.

The UE performs the determined type of measurement (803). Proposal 5 may be used to receive the target signal for performing this measurement procedure.

Subsequently, the UE performs a cell selection or reselection procedure based on a measurement result value (804). For this purpose, the comparison of measurement results of different target signals in Proposal 1 may be used. Further, a measurement procedure for a neighbor cell using Proposal 4 may be included.

Some of the above methods may be selected and applied as a method proposed in the present disclosure. Each method may be performed independently without a separate combination, or one or more methods may be combined and performed in conjunction with each other. Some terms, symbols, and sequences used for description may be replaced by other terms, symbols, and sequences.

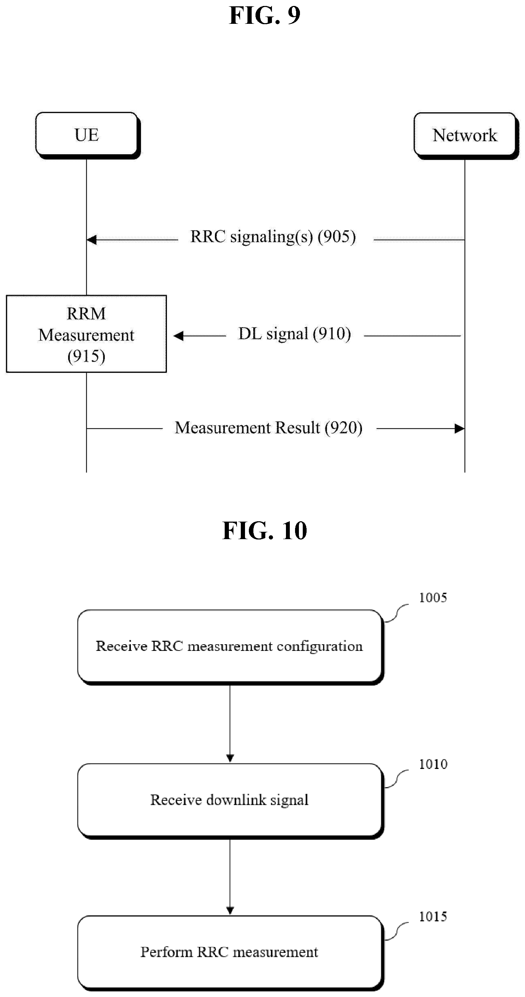

FIG. 9 illustrates a procedure related to an RRM measurement between a UE and a network according to an embodiment.

Referring to Figure 9, the UE may receive at least one RRC signaling from the network (905). The RRC signaling may include at least one of configuration information for an RRM measurement, a DRX configuration, information about a UE operation in RRC inactive/idle mode, information about an event for reporting an RRM measurement, or configuration information related to cell selection/reselection. The configuration information for an RRM measurement may include at least one of configuration information for an RRM measurement of an MR or configuration information for an RRM measurement of an LR.

The network may transmit a downlink signal to the UE (910). The downlink signal transmitted by the network to the UE may include at least one of an MR signal or an LR signal. The MR signal may include an SSB for MR synchronization. The LR signal may include at least one of an LP-SS for LR synchronization or an LP-WUS for MR wake-up.

The UE may perform an RRM measurement on the downlink signal (915). The RRM measurement may include at least one of an RRM measurement of the MR or an RRM measurement of the LR.

The UE may report a result of the RRM measurement to the network (920).

FIG. 10 illustrates signal reception and an RRM measurement of a UE according to an embodiment.

Referring to FIG. 10, the UE may receive an RRM measurement configuration through higher layer signaling (1005).

The UE may receive a downlink signal from a network (1010).

The UE may perform an RRM measurement for the downlink signal based on the RRM measurement configuration (1015).

When the RRM measurement is based on a method related to a second reception scheme among a plurality of reception schemes including a first and second scheme and the second reception scheme performed with lower power than the first reception, an offset specific to the second reception scheme may be applied to a result of the RRM measurement.

The offset specific to the second reception scheme may be determined based on a type of the downlink signal. For example, the offset specific to the second reception scheme may be determined based on whether the downlink signal is an LP-SS or an SSB.

Information regarding the offset specific to the second reception scheme may be provided through system information or dedicated RRC signaling.

The UE may be configured to support an RRM measurement related to the first reception scheme and an RRM measurement related to the second reception scheme. How often the RRM measurement related to the first reception scheme is performed, may be adjusted based on the RRM measurement related to the second reception scheme. For example, based on the RRM measurement related to the second reception scheme having been performed, the UE may omit the RRM measurement related to the first reception scheme at least once.

The UE may be configured to support different types of RRM measurements. The different types of RRM measurements may include at least two of (i) a first type of RRM measurement for measuring the SSB based on the first reception scheme, (ii) a second type of RRM measurement for measuring the LP-SS based on the second reception scheme, (iii) a third type of RRM measurement for measuring the SSB based on the second reception scheme, and (iv) a fourth type of RRM measurement for measuring the LP-SS based on the first reception scheme.

The UE may determine whether a cell selection condition is satisfied based on the result of the RRM measurement to which the offset is applied.

The RRM measurement configuration may include information regarding a target signal received by the second reception scheme, for the RRM measurement.

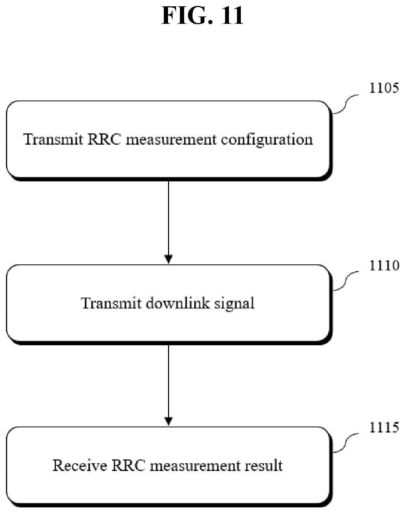

FIG. 11 illustrates signal transmission and RRM measurement result reception of a BS according to an embodiment.

Referring to FIG. 11, the BS may receive an RRM measurement configuration through higher layer signaling (1105).

The BS may receive a downlink signal from a network (1110).

The BS may perform an RRM measurement for the downlink signal based on the RRM measurement configuration (1115).

When the RRM measurement is based on a second reception scheme among a plurality of reception schemes including a first reception scheme of the UE and the second reception scheme performed with lower power than the first reception scheme, an offset specific to the second reception scheme may be applied to the result of the RRM measurement.

The offset specific to the second reception scheme may be determined based on a type of the downlink signal. For example, the offset specific to the second reception scheme may be determined based on whether the downlink signal is an LP-SS or an SSB.

Information regarding the offset specific to the second reception scheme may be provided through system information or dedicated RRC signaling.

The BS may configure the UE with an RRM measurement related to the first reception scheme and an RRM measurement related to the second reception scheme. How often the RRM measurement related to the first reception scheme is performed, may be adjusted based on the RRM measurement related to the second reception scheme. For example, based on the RRM measurement related to the second reception scheme having been performed, the BS may configure the UE to omit the RRM measurement related to the first reception scheme at least once.

The BS may configure the UE to support different types of RRM measurements. The different types of RRM measurements may include at least two of (i) a first type of RRM measurement for measuring the SSB based on the first reception scheme, (ii) a second type of RRM measurement for measuring the LP-SS based on the second reception scheme, (iii) a third type of RRM measurement for measuring the SSB based on the second reception scheme, and (iv) a fourth type of RRM measurement for measuring the LP-SS based on the first reception scheme.

The RRM measurement configuration may include information regarding a target signal received by the second reception scheme, for the RRM measurement.

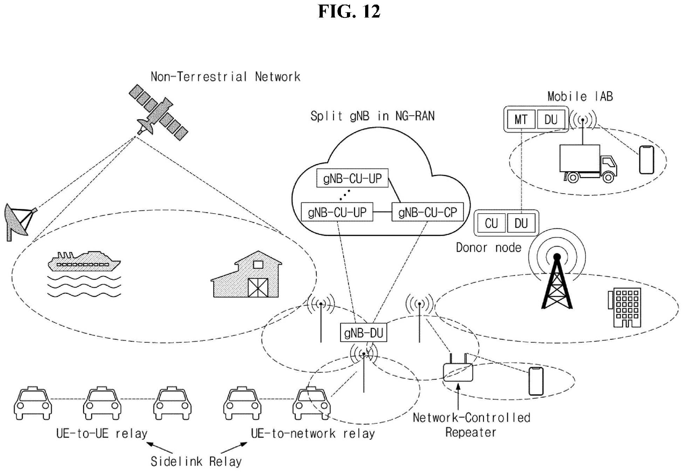

FIG. 12 illustrates a flexible network topology to which some examples of the present disclosure are applicable.

To compensate for incomplete network coverage areas, a network topology configured with a split radio access network (RAN) in a more flexible and resilient manner may be considered. To this end, various nodes such as an IAB node, a relay, and an RF repeater as illustrated in the example of FIG. 12 may be applied, and a non-terrestrial network (NTN) may also be integrated. For example, an IAB node may correspond to a node providing a wireless backhaul. For example, a relay may refer to an intermediate point, and a sidelink relay, which is a relay as which a UE functions, may collectively refer to a UE-to-network (U2N) relay and a UE-to-UE (U2U) relay. For example, an RF repeater may correspond to a node that performs simple signal amplification and forwarding, and a network-controlled repeater may adjust a transmission/-reception configuration based on information provided from a network, in addition to signal amplification and forwarding. For example, an NTN node may correspond to a satellite or aircraft providing NTN coverage, which is difficult for a terrestrial network to provide. In addition to these examples, various intermediate points may be introduced to improve the network topology.

Referring to FIG. 1, a split RAN may support division of a gNB into one centralized unit (CU) and one or more distributed units (DUs). The CU and the DUs may correspond to logical units. The CU may be further divided into a control plane (CP) part and one or more user plane (UP) parts. Since a CP-UP failure affects not only a CU-UP but also a DU, various intermediate points may be introduced to compensate for the failure.

An intermediate point may correspond to a UE or a gNB depending on its relative relationship with other nodes. For example, an IAB node may include a mobile-termination (MT) part and a DU. The MT may connect the IAB node to a donor node. The DU of the IAB node may serve other UEs or connect to another IAB node to provide a multi-hop wireless backhaul to a UE. That is, the IAB node may correspond to a gNB in its relative relationship with a user-side node, and to a UE in its relative relationship with a network-side node.

In some examples of the present disclosure, the description of a UE may apply equally not only to a user-side endpoint but also to an intermediate point that corresponds to a UE in its relative relationship with a network-side endpoint. Similarly, in some examples of the present disclosure, the description of a BS may apply equally not only to a network-side endpoint but also to an intermediate point that corresponds to a BS in its relative relationship with a user-side endpoint. However, in most cases where there is no additional description of operations involving three and more entities, a communication entity in the present disclosure is briefly described using the term UE and/or BS (or first node and/or second node), which is interpreted to include/replace any endpoint or any intermediate point according to its relationship with other nodes.

That is, to simplify the description in some examples of the present disclosure, an operation entity may be referred to as a BS and/or a UE (or a first node and/or a second node). Further, the term BS and/or UE (or first node and/or second node) may be interpreted/replaced as in the following examples: for example, a BS (or first node) and a UE (or second node) may respectively correspond to a first endpoint and a second endpoint; an endpoint and an intermediate point; an intermediate point and an endpoint; or a first intermediate point and a second intermediate point.

In the present disclosure, there may be no intermediate points or one or more intermediate points between a BS and a UE. When an intermediate point exists, it may correspond to an IAB node/relay/RF repeater/NTN node, or a node supporting other functions. The intermediate point may be a fixed node or a mobile (unfixed) node in terms of location.

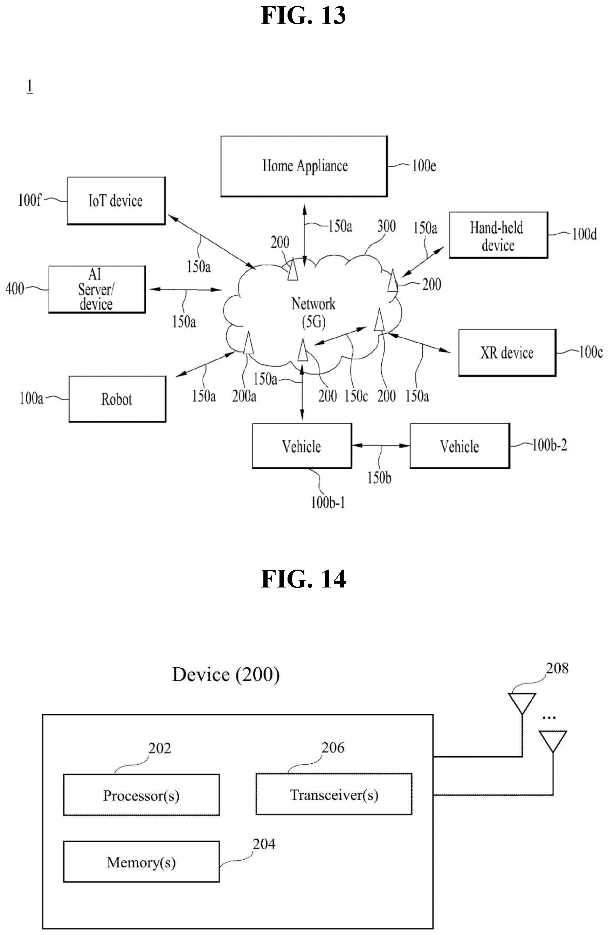

A communication system 1 of FIG. 13 applied to the present disclosure, includes a wireless device, a BS, and a network. A wireless device refers to a device that performs communication using wireless access technologies (e.g., LTE, LTE-A, LTE-A pro, NR, 5G, 5G-A, and 6G), and may be referred to as a communication/wireless/5G device. The wireless device may include, but is not limited to, a robot 100a, vehicles 100b-1 and 100b-2, an extended reality (XR) device 100c, a hand-held device 100d, a home appliance 100e, an Internet of things (IoT) device 100f, and an artificial intelligence (AI) device/server 100g. For example, the vehicle may include a vehicle equipped with wireless communication functionality, an autonomous driving vehicle, a vehicle capable of performing inter-vehicle communication, and so on. The vehicles 100b-1 and 100b-2 may include an unmanned aerial vehicle (UAV) (e.g., drone). The XR device 100c includes an augmented reality (AR)virtual reality (VR)/mixed reality (MR) device, and may be implemented in the form of a head mounted device (HMD), a head-up display (HUD) equipped in a vehicle, a television, a smartphone, a computer, a wearable device, a home appliance, a digital signage, a vehicle, or a robot. The hand-held device 100d may include a smartphone, a smart pad, and a wearable device (e.g., a smartwatch, smart glasses, a computer (e.g., a laptop)). The home appliance 100e may include a TV, a refrigerator, a washing machine, and so on. The IoT device 100f may include a sensor, a smart meter, and so on. A wireless device 110 may correspond to a UE (or first node) or an intermediate point. A network device 120 may correspond to a BS (or second node) or another intermediate point. For example, the network device 120 may be implemented as the wireless device 110, and a specific wireless device 120a may operate as the network device 120 for another wireless device 110.

The wireless devices 100a to 100f may be connected to the network 130 via the BS 120. AI technology may be applied to the wireless devices 100a to 100f, and these devices may be connected to an AI server 100g via the network 130. The network 130 may be configured using a 3G, 4G (e.g., LTE), 5G (e.g., NR), or 6G network. The wireless devices 100a to 100f may communicate with each other via the BS 120/network 130, or they may communicate directly (e.g., sidelink communication) without intervention of the BS 120/network 130. For example, the vehicles 100b-1 and 100b-2 may perform direct communication (e.g., vehicle to vehicle (V2V)/vehicle to everything (V2X) communication). Additionally, the IoT device 100f (e.g., a sensor) may communicate directly with another IoT device 100f (e.g., a sensor) or other wireless devices 100a to 100f.

Wireless communication/connections 150a, 150b, and 150c may be established between the wireless devices 100a to 100f and the BS 120, and between BSs 120 themselves. The wireless communication/connections may be achieved through various wireless access technologies such as UL/DL communication 150a, sidelink communication 150b (or D2D communication), and inter-BS communication 150c (e.g., relay and integrated access backhaul (IAB)). Through the wireless communication/connections 150a, 150b, and 150c, wireless devices and BSs/wireless devices, and BSs may transmit/receive wireless signals to each other. For example, the wireless communication/connections 150a, 150b, and 150c may transmit/receive signals through various physical channels. To this end, based on various proposals of the present disclosure, at least some of a process for setting various configuration information for transmitting/receiving wireless signals, various signal processing processes (e.g., channel encoding/decoding, modulation/demodulation, resource mapping/demapping, and so on), and a resource allocation process may be performed.

FIG. 14 illustrates an example of a wireless device applicable to the present disclosure.

Referring to FIG. 3, a wireless device 200 may transmit and receive wireless signals through various wireless access technologies (e.g., LTE, LTE-A, LTE-A pro, NR, 5G, 5G-A, and 6G). The wireless device 200 may include at least one processor 202 and at least one memory 204, and further include at least one transceiver 206 and/or at least one antenna 208.

The processor 202 may be configured to control the memory 204 and/or the transceiver 206, and implement the descriptions, functions, procedures, proposals, methods, and/or flowcharts disclosed in the present disclosure. For example, the processor 202 may process information in the memory 204 to generate first information/signal, and then transmit a wireless signal including the first information/signal through the transceiver 206. Additionally, the processor 202 may receive a wireless signal including second information/signal through the transceiver 206, and then store information obtained by signal processing of the second information/signal in the memory 204. The memory 204 may be connected to the processor 202 and store various pieces of information related to the operation of the processor 202. For example, the memory 204 may store software code including instructions for performing some or all of processes controlled by the processor 202 or for performing the descriptions, functions, procedures, proposals, methods, and/or flowcharts disclosed in the present disclosure. Herein, the processor 202 and the memory 204 may be part of a communication modem/circuit/chip designed to implement wireless communication technology. The transceiver 206 may be connected to the processor 202 and transmit and/or receive wireless signals through the at least one antenna 208. The transceiver 206 may include a transmitter and/or a receiver. The transceiver 206 may be used interchangeably with a radio frequency (RF) unit. In the present disclosure, a wireless device may also refer to a communication modem/circuit/chip.

Hardware elements of the wireless device 200 will be described below in more detail. At least one protocol layer may be implemented by the at least one processor 202, to which the present disclosure is not limited. For example, the at least one processor 202 may implement at least one layer (e.g., functional layers such as physical (PHY), media access control (MAC), radio link control (RLC), packet data convergence protocol (PDCP), radio resource control (RRC), and service data adaptation protocol (SDAP)). The at least one processor 202 may generate at least one Protocol Data Unit (PDU) and/or at least one service data unit (SDU) according to the descriptions, functions, procedures, proposals, methods, and/or flowcharts disclosed in the present disclosure. The att least one processor 202 may generate messages, control information, data, or information according to the descriptions, functions, procedures, proposals, methods, and/or flowcharts disclosed in the present disclosure. The at least one processor 202 may generate a signal (e.g., baseband signal) including a PDU, an SDU, a message, control information, data, or information according to the functions, procedures, proposals, and/or methods disclosed in the present disclosure, and provide it to the at least one transceiver 206. The at least one processor 202 may receive a signal (e.g., baseband signal) from the at least one transceiver 206 and obtain a PDU, an SDU, a message, control information, data, or information according to the descriptions, functions, procedures, proposals, methods, and/or flowcharts disclosed in the present disclosure.

The at least one processor 202 may be referred to as a controller, microcontroller, microprocessor, or microcomputer. The at least one processor 202 may be implemented by hardware, firmware, software, or a combination thereof. In an example, at least one application specific integrated circuit (ASIC), at least one digital signal processor (DSP), at least one digital signal processing device (DSPD), at least one programmable logic device (PLD), or at least one field programmable gate array (FPGA) may be included in the at least one processor 202. The descriptions, functions, procedures, proposals, methods, and/or flowcharts disclosed in the present disclosure may be implemented using firmware or software, and the firmware or software may be implemented to include a module, a procedure, a function, and so on. The firmware or software configured to perform the descriptions, functions, procedures, proposals, methods, and/or flowcharts disclosed in the present disclosure may be included in the at least one processor 202 or stored in the at least one memory 204 and driven by the at least one processor 202. The descriptions, functions, procedures, proposals, methods, and/or flowcharts disclosed in the present disclosure may be implemented using firmware or software in the form of code, an instruction, and/or a set of instructions.

The at least one memory 204 may be connected to the at least one processor 202 and store various types of data, signals, messages, information, programs, code, instructions, and/or commands. The at least one memory 204 may include read only memory (ROM), random access memory (RAM), erasable programmable read only memory (EPROM), flash memory, a hard drive, a register, a cache memory, a computer-readable storage medium, and/or a combination thereof. The at least one memory 204 may be located inside and/or outside the at least one processor 202. Additionally, the at least one memory 204 may be connected to the at least one processor 202 through various technologies such as wired or wireless connections.

The at least one transceiver 206 may transmit user data, control information, a wireless signal/channel, and so on mentioned in the methods and/or flowcharts of the present disclosure to at least one other device. The at least one transceiver 206 may receive user data, control information, a wireless signal/channel, and so on mentioned in the descriptions, functions, procedures, proposals, methods, and/or flowcharts disclosed in the present disclosure from at least one other device. For example, the at least one transceiver 206 may be connected to the at least one processor 202 and transmit and receive wireless signals. For example, the at least one processor 202 may control the at least one transceiver 206 to transmit user data, control information, or a wireless signal to at least one other device. Additionally, the at least one processor 202 may control the at least one transceiver 206 to receive user data, control information, or a wireless signal from at least one other device. Further, the at least one transceiver 206 may be connected to the at least one antenna 208, and configured to transmit and receive user data, control information, a wireless signal/channel, and so on mentioned in the descriptions, functions, procedures, proposals, methods, and/or flowcharts disclosed in the present disclosure through the at least one antenna 208. In the present disclosure, at least one antenna may be a plurality of physical antennas or a plurality of logical antennas (e.g., antenna ports). The at least one transceiver 206 may convert a received wireless signal/channel from an RF band signal to a baseband signal to process the received user data, control information, wireless signal/channel, and so on, using the at least one processor 202. The at least one transceiver 206 may convert user data, control information, a wireless signal/channel, and so on processed using the at least one processor 202 from a baseband signal to an RF band signal. To this end, the at least one transceiver 206 may include an (analog) oscillator and/or filter.

The components of the wireless device described with reference to FIG. 14 may be referred to by different terms from a functional perspective. For example, the processor 202 may be referred to as a controller, the transceiver 206 as a communication unit, and the memory 204 as a storage unit. In some cases, the communication unit may be used to mean including at least part of the processor 202 and the transceiver 206.

The structure of the wireless device described with reference to FIG. 14 may be understood as the structure of at least part of various devices. For example, the structure of the wireless device illustrated in FIG. 14 may be at least part of the various devices described with reference to FIG. 13 (e.g., the robot 100a, the vehicles 100b-1 and 100b-2, the XR device 100c, the hand-held device 100d, the home appliance 100e, the IoT device 100f, and the AI device/server 100g). Further, according to various embodiments, the device may further include other components in addition to the components illustrated in FIG. 3.

For example, the device may be a portable device such as a smartphone, smart pad, wearable device (e.g., smartwatch and smart glasses), or portable computer (e.g., laptop). In this case, the device may further include at least one of a power supply unit that supplies power and includes a wired/wireless charging circuit, a battery, and so on, an interface unit that includes at least one port (e.g., audio input/output port and video input/output port) for connection to other devices, and an input/output unit for inputting and outputting video information/signals, audio information/signals, data, and/or information input from a user.

For example, the device may be a mobile device such as a mobile robot, vehicle, train, unmanned aerial vehicle (UAV), vessel, and so on. In this case, the device may further include at least one of a driving unit that includes at least one of an engine, motor, powertrain, wheel, brake, or steering system of the device, a power supply unit that supplies power and includes a wired/wireless charging circuit, a battery, and so on, a sensor unit that senses status information, environmental information, and user information of the device or its surroundings, an autonomous driving unit that performs functions such as path maintenance, speed control, and destination setting, and a positioning unit that obtains mobile object position information through the global positioning system (GPS) and various sensors.

For example, the device may be an XR device such as an HMD, a head-up display (HUD) equipped in a vehicle, a television, a smartphone, a computer, a wearable device, a home appliance, digital signage, a vehicle, or a robot. In this case, the device may further include at least one of a power supply unit that supplies power and includes a wired/wireless charging circuit, a battery, and so on, an input/output unit that obtains control information, data, and so on from an external source and outputs a generated XR object, and a sensor unit that senses status information, environmental information, and user information of the device or its surroundings.

For example, the device may be a robot categorized as industrial, medical, home, military, and so on, depending on its purpose or field of use. In this case, the device may further include at least one of a sensor unit that senses status information, environmental information, and user information of the device or its surroundings, and a driving unit that performs various physical actions such as moving robot joints.

For example, the device may be an AI device such as a TV, projector, smartphone, PC, laptop, digital broadcasting terminal, tablet PC, wearable device, set-top box (STB), radio, washing machine, refrigerator, digital signage, robot, or vehicle. In this case, the device may further include at least one of an input unit that obtains various types of data from an external source, an output unit that generates an output related to vision, hearing, or touch, a sensor unit that senses status information, environmental information, and user information of the device or its surroundings, and a training unit that trains a model including an artificial neural network using training data.

The structure of the wireless device illustrated in FIG. 14 may be understood as part of a Radio Access Network (RAN) node (e.g., BS, DU, RU, RR, and so on). That is, the device illustrated in FIG. VI may be a RAN node. In this case, the device may further include a wired transceiver for front haul and/or back haul communication. However, when front haul and/or back haul communication is based on wireless communication, the at least one transceiver 206 illustrated in FIG. 14 may be used for front haul and/or back haul communication, and a wired transceiver may not be included.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

The present disclosure is applicable to UEs, BSs, or other apparatuses in a wireless mobile communication system.

**Claims**

1. A method of receiving a signal by a user equipment (UE) in a wireless communication system, the method comprising:

   receiving a radio resource management (RRM) measurement configuration through higher layer signaling;
   receiving a downlink signal from a network; and
   performing an RRM measurement for the downlink signal based on the RRM measurement configuration,
   wherein based on the RRM measurement being related to a second reception scheme among a plurality of reception schemes including a first reception scheme and the second reception scheme performed with lower power than the first reception scheme, an offset specific to the second reception scheme is applied to a result of the RRM measurement.

2. The method of claim 1, wherein the offset specific to the second reception scheme is determined based on a type of the downlink signal.

3. The method of claim 2, wherein the offset specific to the second reception scheme is determined based on whether the downlink signal is a low power-synchronization signal (LP-SS) or a synchronization signal block (SSB).

4. The method of claim 1, wherein information regarding the offset specific to the second receiving scheme is provided through system information or UE-dedicated radio resource control (RRC) signaling.

5. The method of claim 1, wherein the UE supports an RRM measurement related to the first reception scheme and an RRM measurement related to the second reception scheme, and
   wherein how often the RRM measurement related to the first reception scheme is performed, is adjusted based on the RRM measurement related to the second reception scheme.

6. The method of claim 5, wherein based on the RRM measurement related to the second reception scheme having been performed, the UE omits the RRM measurement related to the first reception scheme at least once.

7. The method of claim 1, wherein the UE is configured to support different types of RRM measurements, and
   wherein the different types of RRM measurements include at least two of (i) a first type of RRM measurement for measuring an SSB based on the first reception scheme, (ii) a second type of RRM measurement for measuring an LP-SS based on the second reception scheme, (iii) a third type of RRM measurement for measuring the SSB based on the second reception scheme, or (iv) a fourth type of RRM measurement for measuring the LP-SS based on the first reception scheme.

8. The method of claim 1, further comprising:
   determining whether a cell selection condition is satisfied based on the result of the RRM measurement to which the offset is applied.

9. The method of claim 1, wherein the RRM measurement configuration includes information regarding a target signal received in the second reception scheme, for the RRM measurement.

10. A non-transitory computer-readable recording medium having a program recorded thereon for performing the method of claim 1.

11. An apparatus for wireless communication, the apparatus comprising:

    a memory configured to store instructions; and
    a processor configured to perform operations by executing the instructions,
    wherein the operations of the processor include:

receiving a radio resource management (RRM) measurement configuration through higher layer signaling;
receiving a downlink signal from a network; and
performing an RRM measurement for the downlink signal based on the RRM measurement configuration, and
wherein based on the RRM measurement being related to a second reception scheme among a plurality of reception schemes including a first reception scheme and the second reception scheme performed with lower power than the first reception scheme, an offset specific to the second reception scheme is applied to a result of the RRM measurement.

12. The apparatus of claim 11, further comprising:

a first receiver configured for the first reception scheme; and
a second receiver configured for the second reception scheme,
wherein the second receiver consumes less power than the first receiver.

13. The apparatus of claim 11, wherein the apparatus is a user equipment (UE) operating in a wireless communication system or a processing device controlling the UE.

14. A method of transmitting a signal by a base station (BS) in a wireless communication system, the method comprising:

transmitting a radio resource management (RRM) measurement configuration to a user equipment (UE) through higher layer signaling;
transmitting a downlink signal to the UE; and
obtaining a result of an RRM measurement performed by the UE for the downlink signal,
wherein based on the RRM measurement being related to a second reception scheme among a plurality of reception schemes including a first reception scheme of the UE and the second reception scheme performed with lower power than the first reception scheme, an offset specific to the second reception scheme is applied to the result of the RRM measurement.

15. A base station (BS) for wireless communication, the BS comprising:

a memory configured to store instructions; and
a processor configured to perform operations by executing the instructions,
wherein the operations of the processor include:

transmitting a radio resource management (RRM) measurement configuration to a user equipment (UE) through higher layer signaling;
transmitting a downlink signal to the UE; and
obtaining a result of an RRM measurement performed by the UE for the downlink signal, and
wherein based on the RRM measurement being related to a second reception scheme among a plurality of reception schemes including a first reception scheme of the UE and the second reception scheme performed with lower power than the first reception scheme, an offset specific to the second reception scheme is applied to the result of the RRM measurement.

# FIG. 1

Initial Cell Search

PSS/SSS & [DLRS] & PBCH

S101

System Information Reception

PDCCH/ PDSCH (BCCH)

S102

Random Access Procedure

PRACH

S103

PDCCH/ PDSCH

S104

PRACH

S105

PDCCH/ PDSCH

S106

General DL/UL Tx/Rx

S108

PDCCH/ PDSCH

S107

PUSCH/ PUCCH

• DL/UL ACK/NACK
• UE CQI/PMI/Rank Report using PUSCH and PUCCH

# FIG. 2

DL assingment-to-PDSCH offset (K0)

PDCCH

slot

PDSCH

PUCCH

PDSCH-to-HARQ-ACK reporting offset (K1)

# FIG. 3

UL grant-to-PUSCH offset (K2)

PDCCH

PUSCH

# FIG. 4

# FIG. 5

# FIG. 6

# FIG. 7

# FIG. 8

# FIG. 9

# FIG. 10

# FIG. 11

Transmit RRC measurement configuration — 1105

Transmit downlink signal — 1110

Receive RRC measurement result — 1115

**FIG. 12**

# FIG. 13

# FIG. 14

## INTERNATIONAL SEARCH REPORT

| International application No. |
| --- |
| **PCT/KR2024/011848** |

| A. | CLASSIFICATION OF SUBJECT MATTER |
| --- | --- |

**H04W 24/08**(2009.01)i; **H04W 52/02**(2009.01)i; **H04W 48/08**(2009.01)i; **H04W 56/00**(2009.01)i: **H04W 76/28**(2018.01)i; **H04B 17/318**(2015.01)i

According to International Patent Classification (IPC) or to both national classification and IPC

| B. | FIELDS SEARCHED |
| --- | --- |

Minimum documentation searched (classification system followed by classification symbols)

H04W 24/08(2009.01); H04L 5/00(2006.01); H04W 24/00(2009.01); H04W 24/10(2009.01); H04W 36/00(2009.01); H04W 52/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: RRM, 저전력(low power), 오프셋(offset), 측정(measurement), 결과(result)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | MODERATOR (NORDIC). Summary of discussions on L1 signal design and procedure for low power WUS. R1-2306133, 3GPP TSG RAN WG1 Meeting #113. 24 May 2023.<br>See sections 2, 3.5, 3.5.1, 3.5.2, 3.11 and 3.14. | 1-4,7-15<br>5-6 |
| Y | EP 4075705 A1 (HUAWEI TECHNOLOGIES CO., LTD.) 19 October 2022 (2022-10-19)<br>See paragraphs [0167]-[0193]; and claims 1-51. | 1-4,7-15 |
| Y | US 2023-0180081 A1 (VIVO MOBILE COMMUNICATION CO., LTD.) 08 June 2023 (2023-06-08)<br>See paragraphs [0045]-[0048]; and claims 1-20. | 8 |
| A | US 2013-0303153 A1 (BONTU, Chandra Sekhar et al.) 14 November 2013 (2013-11-14)<br>See paragraphs [0079]-[0085]; and claims 1-5, 11-15 and 20-35. | 1-15 |
| A | EP 3619972 B1 (CONVIDA WIRELESS, LLC) 21 September 2022 (2022-09-21)<br>See paragraphs [0026]-[0030]; and claims 1-15. | 1-15 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 November 2024** | **22 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011848**

| Patent document cited in search report | | | Publication date (day/month/year) | Patent family member(s) | | | Publication date (day/month/year) |
|---|---|---|---|---|---|---|---|
| EP | 4075705 | A1 | 19 October 2022 | CN | 114902592 | A | 12 August 2022 |
| | | | | CN | 114902592 | B | 12 April 2024 |
| | | | | EP | 4075705 | A4 | 21 December 2022 |
| | | | | US | 2022-0338183 | A1 | 20 October 2022 |
| | | | | WO | 2021-134437 | A1 | 08 July 2021 |
| US | 2023-0180081 | A1 | 08 June 2023 | AU | 2021-321883 | A1 | 10 February 2022 |
| | | | | AU | 2021-321883 | B2 | 01 February 2024 |
| | | | | CN | 113688110 | A | 23 November 2021 |
| | | | | CN | 113688110 | B | 23 July 2024 |
| | | | | CN | 114071371 | A | 18 February 2022 |
| | | | | CN | 114071371 | B | 28 March 2023 |
| | | | | CN | 114071611 | A | 18 February 2022 |
| | | | | CN | 114071611 | B | 26 September 2023 |
| | | | | EP | 4178251 | A1 | 10 May 2023 |
| | | | | EP | 4195712 | A1 | 14 June 2023 |
| | | | | JP | 2023-537025 | A | 30 August 2023 |
| | | | | US | 2023-0328762 | A1 | 12 October 2023 |
| | | | | WO | 2021-139223 | A1 | 15 July 2021 |
| | | | | WO | 2022-028273 | A1 | 10 February 2022 |
| | | | | WO | 2022-028373 | A1 | 10 February 2022 |
| | | | | WO | 2022-028481 | A1 | 10 February 2022 |
| US | 2013-0303153 | A1 | 14 November 2013 | CA | 2872409 | A1 | 14 November 2013 |
| | | | | CA | 2872409 | C | 04 October 2016 |
| | | | | CN | 104488205 | A | 01 April 2015 |
| | | | | CN | 104488205 | B | 03 February 2016 |
| | | | | EP | 2663002 | A1 | 13 November 2013 |
| | | | | EP | 2663002 | B1 | 09 December 2015 |
| | | | | EP | 3079291 | A1 | 12 October 2016 |
| | | | | EP | 3079291 | B1 | 20 February 2019 |
| | | | | KR | 10-1617118 | B1 | 29 April 2016 |
| | | | | KR | 10-2015-0020560 | A | 26 February 2015 |
| | | | | TW | 201349816 | A | 01 December 2013 |
| | | | | TW | I466514 | B | 21 December 2014 |
| | | | | US | 8755791 | B2 | 17 June 2014 |
| | | | | WO | 2013-169433 | A1 | 14 November 2013 |
| EP | 3619972 | B1 | 21 September 2022 | CN | 110754117 | A | 04 February 2020 |
| | | | | CN | 110754117 | B | 04 July 2023 |
| | | | | EP | 3619972 | A1 | 11 March 2020 |
| | | | | JP | 2020-519196 | A | 25 June 2020 |
| | | | | JP | 7150747 | B2 | 11 October 2022 |
| | | | | KR | 10-2020-0003173 | A | 08 January 2020 |
| | | | | KR | 10-2479286 | B1 | 20 December 2022 |
| | | | | US | 11564170 | B2 | 24 January 2023 |
| | | | | US | 2020-0145921 | A1 | 07 May 2020 |
| | | | | WO | 2018-204799 | A1 | 08 November 2018 |

Form PCT/ISA/210 (patent family annex) (July 2022)